# EUROPEAN PATENT APPLICATION

(11) **EP 3 385 752 A1**
(43) Date of publication of application: **10.10.2018**
(21) Application number: 18165446.8
(22) Date of filing: 03.04.2018
(51) Int. Cl.: G01S 17/93, G01S 7/481, G01S 7/486, G01S 7/487

(54) **IMPROVED RESOLUTION FOR A LIDAR SENSOR SYSTEM FOR A MOTOR VEHICLE**

(30) Priority: 06.04.2017 DE 102017107406
(71) Applicant: Valeo Schalter und Sensoren GmbH, 74321 Bietigheim-Bissingen (DE)
(72) Inventor: Krejci, Petr, 108 00 Prague (CZ); Zednik, Pavel, 108 00 Prague (CZ); Kozak, Ondrej, 108 00 Prague (CZ); Prochazka, Josef, 108 00 Prague (CZ)

(57) **Abstract**

The invention relates to a method for operating a lidar sensor system (2) with multiple detection channels (3a-3p) for a motor vehicle (1), including a) scanning an environment (5) of the lidar sensor system (2) with a scanning light of the lidar sensor system (2); including b) measuring a transit time of a reflected light portion of the scanning light for each detection channel (3a-3p) and ascertaining a respective distance (d1-d4) of an object point (P1-P4) for each detection channel (3a-3p) depending on the measured transit time; including c) measuring an intensity (11-14) of the reflected light portion of the scanning light for each detection channel (3a-3p) and associating the respective intensity (I1-I4) with the object point (P1-P4) respectively corresponding to the detection channel (3a-3p); including d) associating multiple object points (P1-P4) with an object (7) in the environment (5) of the lidar sensor system (2); and including e) ascertaining a central point (8) of the object (7) depending on the intensity (11-14) of the object points (P1-P4) associated with the object (7), to improve an effective resolution, in particular an effective angular resolution, of the lidar sensor system (2).

## Description

The invention relates to a method for operating a lidar system with multiple detection channels for a motor vehicle, including scanning an environment of the lidar system with a scanning light of the lidar system and measuring a transit time of a reflected light portion of the scanning light for each detection channel as well as ascertaining a respective distance of an object point for each detection channel depending on the measured transit time. The invention also relates to a lidar system for a motor vehicle with multiple detection channels, including a scanning device for scanning an environment of the lidar system with a scanning light of the lidar system and for measuring a transit time of a reflected light portion of the scanning light for each detection channel as well as including a computing device for ascertaining a respective distance of an object point from the lidar system for each detection channel depending on the measured transit time.

Lidar systems, thus light-detection-and-ranging systems, are often utilized for optical distance and/or speed measurements in modern motor vehicles. Therein, a distance to an object in the environment of the lidar system is calculated from the light transit time of signals, the time-of-flight of the signals, which are emitted by the lidar system and reflected from the object back to the lidar system. The accuracy with which objects can be captured by such a lidar sensor system is dependent on the angular resolution of the lidar sensor system, which is typically dependent on number and configuration of respective reception or detection channels of the sensor. Especially with inexpensive simple lidar sensor systems, an angular resolution is relatively low, for example due to a low number of detection channels, which severely limits the accuracy of capturing an object and correspondingly determining the dimensions or extension of the object. In this context, in DE 10 2009 035 894 B4, a method for lidar sensors is proposed, in which objects are scanned with different angular resolutions depending on the situation.

It is the object of the present invention to improve an effective resolution, in particular an effective angular resolution, of a lidar sensor system.

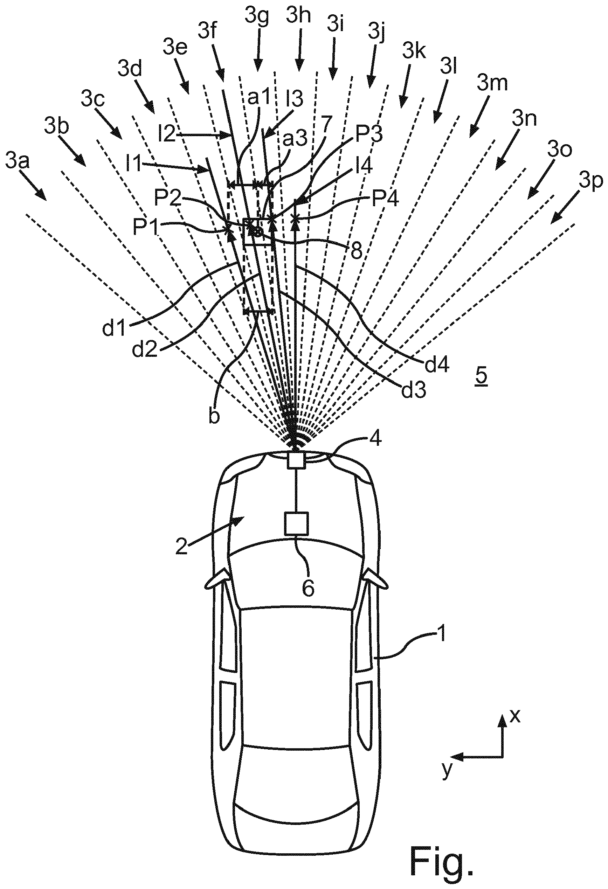

This object is solved by the subject matters of the independent claims. Advantageous embodiments are apparent from the dependent claims, the description and the figure.

The invention relates to a method for operating a lidar sensor system for a motor vehicle, wherein the lidar sensor system comprises multiple detection channels. Therein, one method step usual to lidar sensor systems is scanning an environment of the lidar sensor system with a scanning light of the lidar sensor system and correspondingly measuring a transit time or time-of-flight of a reflected light portion of the scanning light for each detection channel. Furthermore, here, ascertaining a respective distance of an object point from the lidar sensor system and/or from the motor vehicle is effected for each detection channel depending on the measured transit time. Here, ascertaining can be understood in terms of calculating or determining. Therein, the object points are object points of an object in the environment of the lidar sensor system on which the scanning light is reflected. Thus, the object points are associated or can be associated with one or more objects in the environment of the lidar sensor system.

Here, measuring an intensity of the reflected light portion of the scanning light for each detection channel and associating the respective intensity with the object point respectively corresponding to the detection channel are important. Thus, a distance and an intensity are recorded for each object point. Therein, this association and the further association mentioned in the following sentence can be effected by a computing device of the lidar sensor system. Here, a further method step is further associating multiple object points with an object in the environment of the lidar sensor system. For example, adjacent object points can be associated with an object if they have a similar distance, thus, the respective distance values, for example, differ from each other by less than a preset limit value. Object points, the distance of which respectively deviates from each other by less than the preset limit value, can therefore be associated with an object. A next method step is ascertaining or determining a central point of the object, by which a position of the object is determined, depending on the intensity of the object points associated with the object. Thus, in ascertaining the position of the object, intensity values are also evaluated in addition to the usually used distance values.

This has the advantage that an additional present information is utilized and the central point of the object and thus the position of the object can be determined more accurately than without the intensity information of the object points associated with the object. Thereby, the central point or center of the object can be more accurately determined than before, for example via weighting the respective object points as described below. Thus, the accuracy of object capturing with a fixed hardware-related angular resolution of the lidar sensor system can be increased by evaluating the intensity of the portion of the evaluation light reflected on the object in the detection channels. Thus, the angular resolution of the sensor system is effectively improved without the detection channels themselves, which are for example preset by the use of a specific lidar sensor in the lidar sensor system on the side of hardware, having to be modified.

In an advantageous embodiment, it is provided that in ascertaining or determining the central point and/or associating the object points with the object, only object points are taken into account, the intensity of which is greater than a preset intensity minimum value. Thus, only object points or measurement points, the intensity of which exceeds a certain threshold value, the preset intensity minimum value, are evaluated and/or associated with the object.

This has the advantage that an incorrect measurement of an intensity for an object point in a detection channel, as it can for example occur due to defective optics or so-called electrical crosstalk in detection channels adjacent to detection channels with high intensity, is suppressed. Thereby, it is prevented that more object points are associated with an object than it corresponds to reality such that the ascertained central point represents the position of the object with improved accuracy.

Therein, in a further advantageous configuration, it is provided that the intensity minimum value is proportional to an average value or to an arithmetic average of the intensity of all of the object points associated with the object or proportional to an average value or to an arithmetic average of all of the measured intensities. Here, adjusting or fine-tuning the sensor system can be performed via a proportionality factor. This choice for the intensity minimum value has proven particularly simple and well implementable in practice.

In another advantageous embodiment, it is provided that a weighted average value of the positions of the object points associated with the object is calculated in ascertaining the central point of the object, wherein the positions of the object points are each weighted with the intensity of the corresponding object point in calculating the weighted average value and, in particular, the weighted average value of the positions of the object points, briefly: the weighted average value of the object points, is set as the central point of the object. The central point of the object can therefore be determined via a weighted average value of the individual object or measurement points associated with the object. Here, the respective weight is the intensity of the respective object points.

This has the advantage that the central point of the object cannot only be discretely preset depending on number and resolution of the detection channels, but can be preset as a continuous value and with higher angular resolution than preset by the hardware of the detection channels in ascertaining the central point purely based on distance.

In a further advantageous embodiment, it is provided that depending on the ascertained central point of the object and the positions of at least two object points, in particular exactly two object points, an extension of the object in at least one extension direction is ascertained or determined. For example, the extension direction can be a transverse direction and thus a width of the object can be ascertained. Therein, the transverse direction can for example be a direction parallel to a surface, on which the object is located and perpendicular to the main extension direction of at least one respective detection channel, in which at least one of the distances is measured. Alternatively or additionally, the transverse direction can for example coincide with a vehicle transverse direction of the motor vehicle.

This has the advantage that the extension of the object in the at least one extension direction can be particularly accurately detected or calculated independently of the configuration of the detection channels.

Therein, in a particularly preferred embodiment, it is provided that the at least two object points, in particular the exactly two object points, include or are two object points of the object with maximal distance, i.e. distant as far as possible, in the extension direction and the extension of the object in the extension direction is determined as twice the distance of the ascertained central point of the object from the object point which is closer to the ascertained central point of the object. Therein, the object extends in the extension direction starting from its central point equally far in positive as well as negative extension direction, thus, the shorter of the two distances is set as half the extension of the object in the extension direction, thus for example as half of the width of the object.

This has the advantage that the extension of the object is estimated in particularly realistic manner.

In a further advantageous embodiment, it is provided that depending on the ascertained central point of the object and the positions of at least two further object points, in particular exactly two further object points, an extension of the object in at least one further extension direction is ascertained, wherein, in particular, the at least one further extension direction extends perpendicularly to the one extension direction. The further object points can also be or coincide with the same object points, thus said object points from above. The further extension direction can for example coincide with a vehicle vertical direction of the motor vehicle such that a height of the object can be determined. This is for example reasonable if the detection channels are arranged in the manner of a matrix in the environment of the sensor system such that a two-dimensional dimension of the object can basically also be estimated via the distances ascertained for the ascertained object points.

Therein, in a further advantageous embodiment, it can be provided that the at least two object points are two object points of the object with maximal distance, i.e. distant as far as possible, in the further extension direction and that the extension of the object in the further orientation is determined as twice the distance of the ascertained central point of the object from the object point, which is closer to the ascertained central point of the object. Therein, the object extends in the orientation starting from its central point equally far in positive as well as negative extension direction.

Thereby, the extension of the object can be particularly accurately determined in two dimensions.

In a further advantageous embodiment, it is provided that depending on the positions of at least two other object points, in particular exactly two other object points, an extension of the object in another extension direction is ascertained, wherein, in particular, the at least one other extension direction extends perpendicularly to the one extension direction and/or the further extension direction. The other object points can also be or coincide with the one or the further object points of said previously described above preferred embodiments. Thus, in addition to a height and a width, a depth can also be determined, for example as it is explained in the next paragraph.

Here, it can furthermore be provided that in ascertaining an extension of the object in the further extension direction, the distances of the at least two other object points are subtracted from each other and in particular the magnitude of the difference of the distances is set as the extension of the object in the further extension direction. Thus, the further extension direction extends parallel in the direction of the distances of the respective object points or parallel in the direction of at least one distance of one of the object points within the scope of a preset deviation of for example less than 20, 10 or 5°.

This has the advantage that depth information can also be estimated for the object and overall the object can be determined in its three-dimensional dimensions.

The invention also relates to a lidar sensor system for a motor vehicle with multiple detection channels, including a scanning device for scanning an environment of the lidar sensor system with a scanning light of the lidar sensor system and for measuring a transit time of a reflected light portion of the scanning light for each detection channel as well as including a computing device for ascertaining a respective distance of an object point for each detection channel depending on the measured transit time. Therein, the scanning device is moreover formed for measuring an intensity of the reflected light portion of the scanning light for each detection channel. Here, the computing device is formed for associating the respective measured intensity with the object point respectively corresponding to the detection channel (for which the intensity is measured), as well as for associating multiple object points with an object in the environment of the lidar sensor system and for ascertaining a central point of the object depending on the intensity of the object points associated with the object.

Here, advantages and advantageous embodiments of the lidar sensor system correspond to advantages and advantageous embodiments of the described method.

The invention also relates to a motor vehicle with such a lidar sensor system.

The features and feature combinations mentioned above in the description as well as the features and feature combinations mentioned below in the description of figures and/or shown in the figures alone are usable not only in the respectively specified combination, but also in other combinations or alone without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim. Moreover, implementations and feature combinations are to be considered as disclosed, in particular by the implementations set out above, which extend beyond or deviate from the feature combinations set out in the relations of the claims.

Below, embodiments of the invention are explained in more detail based on a schematic drawing. Therein, the only Fig. shows a schematic view of a motor vehicle with an exemplary embodiment of a lidar sensor system.

Here, the lidar sensor system 2 is arranged at a nose of the motor vehicle 1 and comprises multiple, presently 16, detection channels 3a to 3p, which extend fan-like from a scanning device 4 into the front-side environment 5 of the motor vehicle 1 in the shown example. Here, the scanning device 4 serves for scanning the environment 5 of the lidar sensor system 2 with a scanning light of the lidar sensor system 2 as well as for measuring a transit time of a reflected light portion of the scanning light for each of the detection channels 3a to 3p. The scanning device 4 is coupled to a computing device 6, which serves for ascertaining or determining a respective distance of an object point for each detection channel 3a to 3p, for example the distances d1 to d4 of the object points P1 to P4 for the detection channels 3e to 3h, depending on the measured transit time.

Presently, the scanning device 4 furthermore serves for measuring a respective intensity of the reflected light portion of the scanning light for each detection channel 3a to 3p, for example the intensities 11 to 14 of the detection channels 3e to 3h. Presently, intensities 11 to 14 are represented by lines in the figure, the length of which is proportional to the magnitude of the intensity 11 to 14. In the representation, the distances d1 to d4 and the intensities 11 to 14 are only drawn for the four detection channels 3e to 3h which are relevant to the described method in the following for reasons of clarity.

Therein, the computing device 6 serves for associating the respective intensity 11 to 14 with the object point P1 to P4 respectively corresponding to the detection channel 3e to 3h as well as for associating multiple object points, here the object points P1 to P4 or P1 to P3, with an object 7 in the environment 5 of the lidar sensor system 2 and for ascertaining a central point 8 of the object 7 depending on the intensity 11 to 14 of the object points P1 to P4 or P1 to P3 associated with the object 7.

Now, in the present example, a respective distance d1 to d4 of a corresponding object point P1 to P4 is ascertained in the detection channels 3e to 3h. Since the distances ascertained for the other detection channels 3a to 3d and 3i to 3p, respectively, are infinite in this example, they are not drawn here. The corresponding object points are not drawn either. Presently, for the detection channels 3e to 3h, a respective intensity 11 to 14 is also ascertained, which is different from 0. For the further detection channels 3a to 3d and 3i to 3p, respectively, the ascertained intensities are presently equal to 0. These intensities are respectively associated with the corresponding object points, thus presently the intensities 11 to 14 with the object points P1 to P4. In the shown example, the intensity 14 of the object point P4 is now substantially less than the intensities 11 to 13 of the object points P1 to P3. Thus, it can be assumed that an error is present here for example due to crosstalk from the detection channel 3g. Correspondingly, in associating the object points P1 to P3 with the object 7, the object point P4 is not taken into account. Thus, in the shown example, the central point 8 of the object 7 is ascertained depending on the intensities I1 to I3 of the object points P1 to P3 associated with the object 7. Therein, the central point 8 is presently determined via a weighted average value of the individual intensities I1 to I3 of the object points P1 to P3 associated with the object 7. Therein, the weighting is the intensity I1 to I3 of the object points P1 to P3.

After determining the weighted central point 8, the extension of the object 7 in a transverse direction, the y-direction, which also coincides with the vehicle transverse direction of the motor vehicle 1, and thus a width b of the object 7 is determined. Hereto, the two outermost object points, the object points of the object 7 distant as far as possible from each other, the object points P1 and P3, are determined and the distance a1 and a3 of the two measurement points P1, P3 to the weighted central point 8 is respectively calculated. The shorter of the two distances, presently the distance a3, is set as half the width b of the object 7 in y-direction.

## Claims

1. Method for operating a lidar sensor system (2) with multiple detection channels (3a-3p) for a motor vehicle (1), including the method steps:
a) scanning an environment (5) of the lidar sensor system (2) with a scanning light of the lidar sensor system (2);
b) measuring a transit time of a reflected light portion of the scanning light for each detection channel (3a-3p) and ascertaining a respective distance (d1-d4) of an object point (P1-P4) for each detection channel (3a-3p) depending on the measured transit time;
**characterized by**
c) measuring an intensity (I1-I4) of the reflected light portion of the scanning light for each detection channel (3a-3p) and associating the respective intensity (I1-I4) with the object point (P1-P4) respectively corresponding to the detection channel (3a-3p);
d) associating multiple object points (P1-P4) with an object (7) in the environment (5) of the lidar sensor system (2);
e) ascertaining a central point (8) of the object (7) depending on the intensity (I1-I4) of the object points (P1-P4) associated with the object (7).

2. Method according to claim 1,
**characterized in that**
in ascertaining according to method step e) and/or associating according to method step d), only object points (P1-P4) are taken into account, the intensity (I1-I4) of which is greater than a preset intensity minimum value.

3. Method according to claim 2,
**characterized in that**
the intensity minimum value is proportional to an average value of the intensities (I1-I4) of all of the object points (P1-P4) associated with the object (7) or all of the measured intensities (I1-I4).

4. Method according to any one of the preceding claims,
**characterized in that**
in ascertaining the central point (8) of the object (7) according to method step e), a weighted average value of the positions of the object points (P1-P4) is calculated, wherein the positions of the object points (P1-P4) are respectively weighted with the intensity (I1-I4) of the corresponding object points (P1-P4) in calculating the weighted average value and in particular the weighted average value is set as the central point (8) of the object (7).

5. Method according to any one of the preceding claims,
**characterized in that**
an extension of the object (7) in at least one extension direction is ascertained depending on the ascertained central point (8) of the object (7) and the positions of at least two object points (P1, P3).

6. Method according to claim 5,
**characterized in that**
the at least two object points (P1-P4) are two object points (P1, P3) of the object (7) distant as far as possible in the extension direction and the extension of the object (7) in the extension direction is determined as twice the distance (d1-d4) of the ascertained central point (8) of the object (7) from the object point (P1-P4), which is closer to the ascertained central point (8) of the object (7), wherein the object (7) extends in the extension direction starting from its central point (8) equally far in positive as well as negative extension direction.

7. Method according to claim 5 or 6,
**characterized in that**
depending on the ascertained central point (8) of the object (7) and the positions of at least two further object points (P1-P4), an extension of the object (7) in at least one further extension direction is ascertained, wherein the at least one further extension direction extends perpendicularly to the one extension direction.

8. Method according to claim 7,
**characterized in that**
the at least two object points (P1-P4) are two object points (P1-P4) of the object (7) distant as far as possible in the further extension direction and the extension of the object (7) in the further extension direction is determined as twice the distance (d1-d4) of the ascertained central point (8) of the object (7) from the object point (P1-P4), which is closer to the ascertained central point (8) of the object (7), wherein the object (7) extends in the extension direction starting from its central point (8) equally far in positive as well as negative extension direction.

9. Method according to any one of the preceding claims,
**characterized in that**
depending on the positions of at least two other object points (P1-P4), an extension of the object (7) in another extension direction is ascertained, wherein in particular the at least one other extension direction extends perpendicularly to the one extension direction and/or the further extension direction.

10. Method according to claim 9,
**characterized in that**
in ascertaining the extension of the object (7) in the further extension direction, the distances (d1-d4) of the at least two object points (P1-P4) are subtracted from each other and in particular the magnitude of the difference of the distances (d1-d4) is set as the extension in the further extension direction.

11. Lidar sensor system (2) for a motor vehicle (1), with multiple detection channels (3a-3p), including
- a scanning device (4) for scanning an environment (5) of the lidar sensor system (2) with a scanning light of the lidar sensor system (2) and for measuring a transit time of a reflected light portion of the scanning light for each detection channel (3a-3p);
- a computing device (6) for ascertaining a respective distance (d1-d4) of an object point (P1-P4) for each detection channel (3a-3p) depending on the measured transit time,
**characterized in that**
- the scanning device (4) is formed for measuring an intensity (I1-I4) of the reflected light portion of the scanning light for each detection channel (3a-3p); and
- the computing device (6) is formed for associating the respective intensity (I1-I4) with the object point (P1-P4) respectively corresponding to the detection channel (3a-3p), for associating multiple object points (P1-P4) with an object (7) in the environment (5) of the lidar sensor system as well as for ascertaining a central point (8) of the object depending on the intensity (I1-I4) of the object points (P1-P4) associated with the object (7).

12. Motor vehicle (1) with a lidar sensor system (2) according to claim 11.
